(19) Europäisches Patentamt
European Patent Office
Office européen des brevets

(11) **EP 4 264 764 B1**

(12) **FASCICULE DE BREVET EUROPEEN**

(45) Date de publication et mention
de la délivrance du brevet:
**09.07.2025   Bulletin 2025/28**

(21) Numéro de dépôt: **21823870.7**

(22) Date de dépôt: **01.12.2021**

(51) Classification Internationale des Brevets (IPC):
*H02H 7/12* *(2006.01)*      *H02M 3/158* *(2006.01)*

(52) Classification Coopérative des Brevets (CPC):
**H02H 7/1213; B60L 3/0069; B60L 3/04;
H02M 3/1584;** H02M 1/32

(86) Numéro de dépôt international:
**PCT/EP2021/083781**

(87) Numéro de publication internationale:
**WO 2022/128476 (23.06.2022 Gazette 2022/25)**

(54) **CONVERTISSEUR DE TENSION ET VEHICULE AUTOMOBILE COMPORTANT UN TEL CONVERTISSEUR DE TENSION**

SPANNUNGSWANDLER UND KRAFTFAHRZEUG MIT EINEM SOLCHEN SPANNUNGSWANDLER

VOLTAGE CONVERTER AND MOTOR VEHICLE COMPRISING SUCH A VOLTAGE CONVERTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **17.12.2020   FR 2013540**

(43) Date de publication de la demande:
**25.10.2023   Bulletin 2023/43**

(73) Titulaire: **Valeo Electrification
95800 Cergy (FR)**

(72) Inventeurs:
• **TALON, Emmanuel
  95892 CERGY PONTOISE (FR)**
• **ROCHER, Kevin
  95892 CERGY PONTOISE (FR)**

(74) Mandataire: **Valeo Powertrain Systems
Service Propriété Intellectuelle
Immeuble le Delta
14, avenue des Béguines
95892 Cergy Pontoise (FR)**

(56) Documents cités:
**WO-A1-2019/120536      US-A1- 2011 121 807
US-A1- 2019 089 248**

**Description**

La présente invention concerne un convertisseur de tension et un véhicule automobile comportant un tel convertisseur de tension.

La présente invention peut s'appliquer en particulier dans le domaine des véhicules automobiles hybrides.

La publication WO 2019/120536 A1 décrit le système détecte un court-circuit entre les points de masse et de la phase interne a partir d'un courant DC et une tension DC détectés à la première extrémité de la liaison de transmission DC.

La publication US 2015 061 388 A1 de demande de brevet américain décrit un convertisseur de tension du type comportant :

- un point de masse destiné à être connecté à une masse électrique ;
- un point de haute tension destiné à présenter une haute tension par rapport à la masse électrique ;
- un point de basse tension destiné à présenter une basse tension par rapport à la masse électrique ;
- au moins une cellule de conversion de tension connectée aux points de masse, de haute tension et de basse tension pour réaliser une conversion entre la haute tension et la basse tension ; et
- un système de protection conçu pour détecter un court-circuit entre les points de masse et de haute tension et/ou entre les points de masse et de basse tension.

Dans cette publication, un dispositif de mesure du courant au point de haute tension et un dispositif de mesure du courant au point de basse tension sont prévus.

Le système de protection est ainsi conçu pour détecter un court-circuit entre les points de masse et de haute tension à partir de la mesure du courant de haute tension, et un court-circuit entre les points de masse et de basse tension à partir de la mesure du courant de basse tension.

Il peut ainsi être souhaité de prévoir un convertisseur de tension permettant de simplifier la détection de court-circuit.

Il est donc proposé un convertisseur de tension du type précité, caractérisé en ce qu'il comporte en outre un dispositif de mesure d'un courant de masse circulant entre ce point de masse et la masse électrique, et en ce que le système de protection est conçu pour détecter le court-circuit à partir du courant de masse mesuré.

Ainsi, grâce à l'invention, un seul dispositif de mesure peut être utilisé pour détecter à la fois un court-circuit du côté haute tension et un court-circuit du côté basse tension.

De façon optionnelle, le courant de masse sort du convertisseur de tension par le point de masse.

De façon optionnelle, le système de protection est conçu, en réponse à la détection du court-circuit, pour placer le convertisseur de tension dans un mode sécurisé empêchant un écoulement de courant entre les points de haute tension et de basse tension et vice versa au travers de la ou des cellules.

De façon optionnelle également, dans le mode sécurisé, le point de basse tension est déconnecté de chaque cellule afin d'empêcher un écoulement de courant entre la ou les cellules et le point de basse tension et vice-versa.

De façon optionnelle également, le convertisseur de tension comporte en outre un commutateur de sécurité pour chaque cellule, placé entre cette cellule et le point de basse tension et le dispositif de protection est conçu pour placer le convertisseur de tension en mode sécurisé, en ouvrant ce ou ces commutateurs de sécurité.

De façon optionnelle également, dans le mode sécurisé, chaque cellule est dans un état sécurisé dans lequel toute entrée de courant dans la cellule est bloquée.

De façon optionnelle également, dans le mode sécurisé, chaque cellule est dans un état sécurisé dans lequel tout passage de courant dans la cellule est bloqué.

De façon optionnelle également, chaque cellule comporte un bras de commutation comportant un interrupteur de côté haut et un interrupteur de côté bas connectés l'un à l'autre en un point milieu, le bras de commutation étant connecté entre le point de haute tension et le point de masse, tandis que le point milieu est connecté au point de basse tension, par exemple par l'intermédiaire d'une inductance.

De façon optionnelle également, le système de protection est conçu pour placer chaque cellule dans son état sécurisé, en commandant l'ouverture de ses interrupteurs de côté haut et bas.

De façon optionnelle également, le système de protection comporte un dispositif de comparaison conçu pour détecter le court-circuit lorsque la mesure de courant de masse est supérieure à un seuil prédéfini.

De façon optionnelle également, le convertisseur de tension comporte en outre un dispositif de mesure de la haute tension et le système de protection est conçu pour détecter un court-circuit à partir de la mesure de haute tension, par exemple lorsque cette dernière passe sous à un seuil prédéfini. Par exemple, le système de protection comporte un dispositif de comparaison de la mesure de haute tension avec ce seuil prédéfini.

De façon optionnelle également, le convertisseur de tension comporte en outre un dispositif de mesure de la basse tension et le système de protection est conçu pour détecter un court-circuit à partir de la mesure de basse tension, par exemple lorsque cette dernière passe sous un seuil prédéfini. Par exemple, le système de protection comporte un dispositif de comparaison de la mesure de basse tension avec ce seuil prédéfini.

De façon optionnelle également, le convertisseur de tension comporte en outre, pour chaque cellule, un dispositif de mesure d'un courant de cellule entrant dans la cellule depuis le point de basse tension, ainsi qu'un système de validation du courant de masse mesuré à partir des courants de cellule mesurés.

De façon optionnelle également, le système de validation est en outre conçu, en cas de non validation, pour fournir un message indiquant la non validation du courant de masse mesuré.

De façon optionnelle également, le système de validation comporte un module d'estimation du courant de masse et un module de comparaison du courant de masse mesuré avec le courant de masse estimé pour déterminer si les courants de masse mesuré et estimé sont consistants l'un avec l'autre.

Il est également proposé un véhicule automobile comportant un convertisseur de tension selon l'invention.

L'invention sera mieux comprise à l'aide de la description qui va suivre, donnée uniquement à titre d'exemple et faite en se référant aux dessins annexés dans lesquels :

La [Fig. 1] est un schéma fonctionnel électrique d'un exemple de convertisseur de tension selon l'invention,
La [Fig. 2] est un circuit électrique illustrant un mode de réalisation d'une cellule de conversion de tension du convertisseur de tension de la figure 1, et
La [Fig. 3] est un circuit électrique illustrant un mode de réalisation d'un commutateur de sécurité du convertisseur de tension de la figure 1.

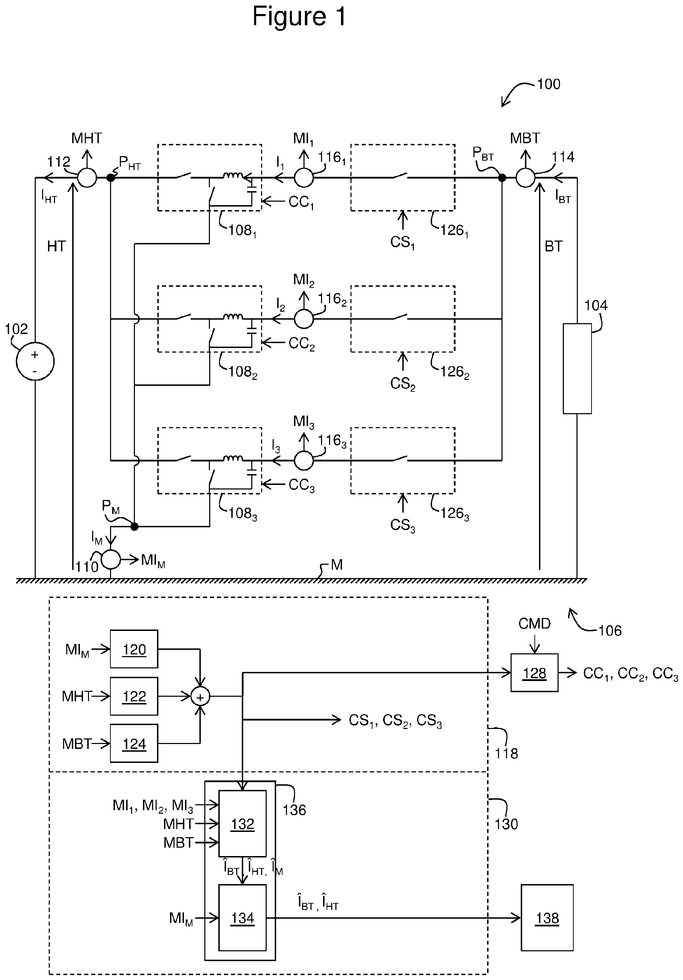

En référence à la figure 1, un système électrique 100 destiné à équiper par exemple un véhicule automobile va à présent être décrit.

Le système 100 comporte tout d'abord une masse électrique M, une source de tension continue 102 (telle qu'une batterie) conçue pour fournir une tension haute HT (par exemple 48 V) par rapport à la masse électrique M et une charge 104 conçue pour être alimentée électriquement par une basse tension BT (par exemple 12 V) par rapport à la masse électrique M. De manière générale, la tension haute HT est supérieure ou égale à la tension basse BT.

Afin d'obtenir la basse tension BT à partir de la haute tension HT, le système 100 comporte en outre un convertisseur de tension 106.

Le convertisseur de tension 106 comporte tout d'abord un point de masse $P_M$ destiné à être connecté à la masse électrique M, un point de haute tension $P_{HT}$ connecté à la source de tension continue 102 afin de présenter la haute tension HT par rapport à la masse électrique M et un point de basse tension $P_{BT}$ connecté à la charge 104 afin de présenter la basse tension BT par rapport à la masse électrique M. Un courant de haute tension $I_{HT}$ est destiné à sortie du convertisseur de tension 106 par le point de haute tension $P_{HT}$ et un courant de basse tension $I_{BT}$ est destiné à entrer dans le convertisseur de tension 106 par le point de basse tension $P_{BT}$.

Le convertisseur de tension 106 comporte en outre au moins une cellule de conversion de tension connectée aux points de masse $P_M$, de haute tension $P_{HT}$ et de basse tension $P_{BT}$ pour réaliser une conversion entre la haute tension HT et la basse tension BT.

Dans l'exemple décrit, trois cellules $108_{1-3}$ sont prévues en parallèle.

Toujours dans l'exemple décrit, chaque cellule $108_{1-3}$ est une cellule à commutation.

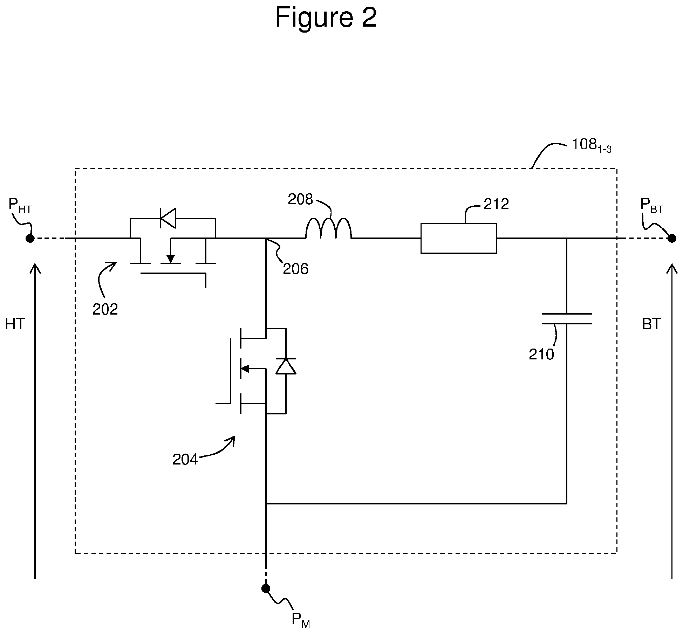

En référence à la figure 2, nous allons maintenant décrire ces cellules.

Chaque cellule $108_{1-3}$ comporte par exemple un bras de commutation comportant un interrupteur de côté haut 202 et un interrupteur de côté bas 204 connectés l'un à l'autre en un point milieu 206. Le bras de commutation est connecté entre le point de haute tension $P_{HT}$ et le point de masse $P_M$ pour recevoir la haute tension HT. Chaque cellule $108_{1-3}$ comporte en outre une inductance 208 connectant le point milieu 206 au point de basse tension $P_{BT}$ et une capacité 210 connectant le point de basse tension $P_{BT}$ à la masse électrique M, par exemple directement ou bien, comme illustré, en étant connectée au point de masse $P_M$. Chaque cellule $108_{1-3}$ comporte en outre par exemple une résistance 212 en série avec l'inductance 208. En variante, les cellules $108_{1-3}$ ne comporte pas de résistance 212 en série avec l'inductance 208.

Les interrupteurs 202, 204 sont par exemple des interrupteurs à transistor tels que des transistors de type FET (de l'anglais « Field-Effect Transistor ») ou bien des transistors bipolaires à grille isolée, généralement désignés par l'acronyme IGBT (de l'anglais « Insulated Gate Bipolar Transistor ») ou bien encore des transistors à haute mobilité électronique désignés par l'acronyme HEMT (de l'anglais « high-electron-mobility transistor »).

Par exemple, les transistors de type FET sont des MOSFET en silicium (Si-MOSFET) ou en carbure de silicium (SiC-MOSFET) ou sont des transistors FET en nitrure de gallium (GaN-FET).

Par exemple, les transistors de type HEMT sont des transistors HEMT en nitrure de gallium (GaN-HEMT).

De retour à la figure 1, nous allons maintenant expliquer comment sont commandés les interrupteurs 202, 204.

Chaque cellule $108_{1-3}$ est conçue pour être commandée en fonctionnement normal par des commandes $CC_{1-3}$ pour alternativement ouvrir et fermer les interrupteurs de côté haut 202 et de côté bas 204, en opposition l'un de l'autre. En outre, comme cela sera expliqué par la suite, les commandes $CC_{1-3}$ peuvent ouvrir les deux interrupteurs 202, 204 en même temps.

Le convertisseur de tension 106 comporte en outre un dispositif 110 de mesure d'un courant de masse $I_M$ circulant entre ce point de masse $P_M$ et la masse électrique M. En d'autres termes, dans l'exemple décrit, le courant de masse $I_M$ sort du convertisseur de tension 106 par le point de masse $P_M$.

Le convertisseur de tension 106 comporte en outre un dispositif 112 de mesure de la haute tension HT et un dispositif 114 de mesure de la basse tension BT. Les mesures respectives de ces dispositifs 112, 114 seront notées par la suite MHT et MBT.

Le convertisseur de tension 106 comporte en outre, pour chaque cellule $108_{1-3}$, un dispositif $116_{1-3}$ de mesure d'un courant de cellule $I_{1-3}$ entrant dans la cellule $108_{1-3}$ en provenance du point de basse tension $P_{BT}$.

Chacun des dispositifs 110 et $116_{1-3}$ de mesure de courant peut par exemple comporter un shunt, c'est-à-dire une résistance traversée par le courant à mesurer et dont la tension à ses bornes est mesurée.

Le convertisseur de tension 106 comporte en outre un système de protection 118 conçu pour détecter un court-circuit entre les points de masse $P_M$ et de haute tension $P_{HT}$ (appelé par la suite court-circuit de haute tension) et/ou entre les points de masse $P_M$ et de basse tension $P_{BT}$ (appelé par la suite court-circuit de basse tension). Plus précisément, le système de protection 118 est conçu pour détecter le court-circuit à partir du courant de masse mesuré $MI_M$ par le dispositif de mesure 110, et de préférence indépendamment des mesures de haute tension MHT et de basse tension MBT.

Pour cela, dans l'exemple décrit, le système de protection 118 comporte tout d'abord un dispositif de comparaison 120 conçu pour détecter le court-circuit lorsque la mesure de courant de masse $MI_M$ est supérieure à un seuil prédéfini. En effet, lorsqu'un court-circuit de haute tension ou bien de basse tension apparaît, un courant de court-circuit élevé s'écoule vers la masse M de sorte que le courant de masse $I_M$ devient élevé dans les deux cas. Ainsi, avec le seul dispositif de mesure 110, il est possible de détecter les deux types de court-circuit.

Le système de protection 118 est en outre conçu, dans l'exemple décrit, pour détecter un court-circuit de haute tension à partir de la mesure de haute tension MHT réalisée par le dispositif de mesure 112, de préférence indépendamment de la mesure de courant de masse $MI_M$. Par exemple, le système de protection 118 comporte un dispositif de comparaison 122 conçu pour détecter le court-circuit de haute tension lorsque la mesure de haute tension MHT est inférieure à un seuil prédéfini.

Le système de protection 118 est en outre conçu, dans l'exemple décrit, pour détecter un court-circuit de basse tension à partir de la mesure de basse tension MBT réalisée par le dispositif de mesure 114, de préférence indépendamment de la mesure de courant de masse $MI_M$. Par exemple, le système de protection 118 comporte un dispositif de comparaison 124 conçu pour détecter le court-circuit de basse tension lorsque la mesure de basse tension MBT est inférieure à un seuil prédéfini.

Ainsi, pour les deux types de court-circuit, il y a une redondance de détection. De cette manière, il est possible d'atteindre un niveau de sécurité de détection élevé. Par exemple, pour chaque type de court-circuit, la détection par le courant et par la tension peuvent être chacune de niveau de sécurité ASIL B (de l'anglais « Automotive Safety Integrity Level ») et leur combinaison peut permettre d'atteindre le niveau ASIL C plus élevé.

Le système de protection 118 est conçu, en réponse à la détection d'un court-circuit, pour placer le convertisseur de tension 106 dans un mode sécurisé empêchant un écoulement de courant entre les points de haute tension $P_{HT}$ et de basse tension $P_{BT}$ au travers de la ou des cellules $108_{1-3}$. Ainsi, le réseau haute tension et le réseau basse tension peuvent être isolés l'un de l'autre afin d'empêcher la propagation de la défaillance sur l'autre réseau.

Par exemple, le système de protection 118 est conçu pour placer le convertisseur de tension 106 en mode sécurisé, en déconnectant le point de basse tension $P_{BT}$ de chaque cellule $108_{1-3}$. Ainsi, cela empêche un écoulement de courant entre la ou les cellules $108_{1-3}$ et le point de basse tension $P_{BT}$. Par exemple, le convertisseur de tension 106 comporte un commutateur de sécurité $126_{1-3}$ pour chaque cellule $108_{1-3}$. Ce commutateur de sécurité $126_{1-3}$ est placé par exemple entre cette cellule $108_{1-3}$ et le point de basse tension $P_{BT}$.

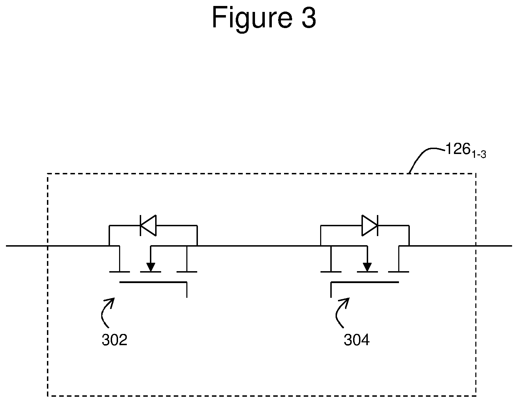

En référence à la figure 3, nous allons maintenant décrire un commutateur de sécurité.

Chaque commutateur de sécurité $126_{1-3}$ comporte par exemple deux interrupteurs à transistor 302, 304 montés en série et en opposition l'un par rapport à l'autre. Ainsi, lorsqu'ils sont ouverts tous les deux, le passage de courant est empêché dans les deux sens d'écoulement. En particulier, le passage de courant par la diode inverse de l'un est alors empêché par l'autre.

Dans l'exemple décrit à la figure 3, les deux interrupteurs à transistor 302, 304 sont des transistors MOSFET de Type N connecté par leur source. En variante, les deux interrupteurs à transistor 302, 304 peuvent être des transistors FET ou HEMT connectés par leur source.

De retour à la figure 1, nous allons maintenant expliquer comment fonctionnent les commutateurs de sécurité.

Chacun des commutateurs de sécurité $126_{1-3}$ est fermé en fonctionnement normal et est conçu pour recevoir un signal de mise en protection $CS_{1-3}$ de la part du dispositif de protection 118.

Dans l'exemple décrit, le système de protection 118 est conçu pour fournir ce signal de mise en protection en cas de détection d'un court-circuit (par au moins un des dispositifs 120, 122, 124). Dans l'exemple décrit, le bloc « + » de la figure 1 indique la fonction logique OU.

Dans d'autres modes de réalisation, des commutateurs de sécurité similaires aux commutateurs de sécurité

$126_{1-3}$ peuvent être prévu du côté haute tension, en complément ou bien à la place des commutateurs de sécurité $126_{1-3}$.

Dans d'autre modes de réalisation, un unique commutateur de sécurité peut être prévu sur la branche commune aux cellules $108_{1-3}$, connectée au point de haute tension $P_{HT}$ ou bien au point de basse tension $P_{BT}$. Un commutateur de sécurité par cellule présente des avantages, en particulier lorsque le convertisseur comporte un dispositif permettant de détecter la cellule où se produit une défaillance. En effet, dans certains modes de fonctionnement du convertisseur de tension 106, toutes les cellules $108_{1-3}$ n'ont pas besoin d'être toutes utilisées en même temps. Ainsi, il est possible de déconnecter uniquement la cellule défectueuse via le commutateur de sécurité associé, que ce dernier soit placé du côté haute tension ou bien du côté basse tension. Un tel mode est par exemple le mode de précharge, dans lequel des capacités (comme les capacités 210) sont chargées à partir de la basse tension BT, avant de connecter la source de tension 102 au convertisseur de tension 106. Un autre mode où les cellules $108_{1-3}$ n'ont pas besoin d'être toutes utilisées peut-être un mode de fonctionnement dégradé dans lequel la cellule défaillante est isolée par l'ouverture du commutateur de sécurité $126_{1-3}$ associé, mais où les autres cellules continuent à être utilisée pour réaliser la conversion de tension en maintenant fermés les commutateurs de sécurités associés.

En outre, le système de protection 118 est conçu pour placer le convertisseur de tension 106 en mode sécurisé, en plaçant chaque cellule $108_{1-3}$ dans un état sécurisé. Dans cet état sécurisé, toute entrée de courant dans la cellule $108_{1-3}$ est bloquée. Dans l'exemple décrit, le système de protection 118 est conçu pour commander l'ouverture des interrupteurs de côté haut et bas de la cellule $108_{1-3}$. Par exemple, le convertisseur de tension 106 comporte un étage de pilotage 128 (de l'anglais « driver stage ») des interrupteurs de côté haut et bas et le système de protection 118 est conçu pour envoyer le signal de mise en protection à l'étage de pilotage 128, afin que ce dernier ignore les commandes CMD normalement reçues pour réaliser la conversion de tension et ouvre à la place, dans chaque cellule $108_{1-3}$, les deux interrupteurs de côté haut 202 et bas 204.

Si la défaillance se produit en fait sur l'un des interrupteurs 202, 204 des cellules $108_{1-3}$, ces commandes d'ouverture de l'étage de pilotage 128 peuvent être inefficaces. En effet, l'interrupteur défaillant peut se comporter en court-circuit indépendamment de la commande qu'il reçoit. Cependant, l'ouverture des commutateurs de sécurité $126_{1-3}$ permet tout de même de placer le convertisseur de tension 106 en mode sécurisé.

Par ailleurs, le convertisseur de tension 106 comporte un système 130 de validation du courant de masse mesuré $MI_M$ à partir des courants de cellule mesurés $MI_{1-3}$ par les dispositifs de mesure $116_{1-3}$.

Plus précisément, dans l'exemple décrit, le système de validation 130 comporte un module 132 d'estimation du courant de masse $I_M$ à partir des courants de cellule mesurés $MI_{1-3}$, par exemple à partir de leur somme. Dans l'exemple décrit, l'estimation est en outre réalisée à partir des mesures de haute tension MHT et de basse tension MBT, par exemple à partir d'un rapport de ces deux mesures. Par exemple, l'estimation tient compte du fait que la puissance côté haute tension est égale à la puissance côté basse tension, moyennant un facteur de rendement de conversion dépendant du mode de fonctionnement du convertisseur de tension 106.

Par exemple, lorsque le convertisseur de tension fonctionne en mode de réduction de tension (de l'anglais « buck ») du côté source vers le côté charge, l'estimation peut être :

[Math. 1]

$$\hat{I}_M = \sum I_k \cdot [1 - (1/0,9507) \cdot (MBT/MHT)]$$

avec k = 1...3 dans l'exemple décrit.

Toujours par exemple, lorsque le convertisseur de tension fonctionne en mode d'amplification de tension (de l'anglais « boost ») du côté charge vers le côté source, par exemple pour recharger la source de tension continue 102, l'estimation peut être :

[Math. 2]

$$\hat{I}_M = \sum I_k \cdot [1 - (1/0,9412) \cdot (MBT/MHT)]$$

Toujours par exemple, dans les autres cas (ni buck, ni boost), par exemple, lorsque la haute tension mesurée MHT ou la basse tension mesurée MBT est sensiblement nulle, l'estimation peut être :

[Math. 3]

$$\hat{I}_M = \sum I_k \cdot [1 - (1) \cdot (MBT/MHT)]$$

Le système de validation 130 comporte en outre un module 134 de comparaison du courant de masse mesuré $MI_M$ avec le courant de masse estimé $\hat{I}_M$. Lorsque les courants de masse mesuré $MI_M$ et estimé $\hat{I}_M$ sont consistants l'un avec l'autre, le courant de masse mesuré $MI_M$ est validé. Le module de comparaison 134 utilise pour cela un critère de consistance qui est par exemple que la différence des courants de masse mesuré $MI_M$ et estimé $\hat{I}_M$ est inférieure à un seuil prédéfini.

De préférence, les modules 132, 134 sont indépendants l'un de l'autre.

Dans l'exemple décrit, le système de validation 130 comporte un système informatique 136 (tel qu'un microcontrôleur) comportant une unité de traitement de données (telle qu'un microprocesseur) et une mémoire principale (telle qu'une mémoire RAM, de l'anglais « Random Access Memory ») accessible par l'unité de traitement. Un programme d'ordinateur contenant des instructions pour l'unité de traitement est destiné à être chargé dans la mémoire principale, afin que l'unité de traitement exécute ses instructions. Ainsi, dans l'exemple décrit, les modules 132, 134 sont des modules logiciels du programme d'ordinateur. Pour réaliser l'indépendance des modules 132, 134, il est par exemple possible de partager le système informatique 136 (le cas échéant, le microcontrôleur) en plusieurs partitions indépendantes avec des autorisations d'accès (lecture et écriture notamment) différentes et de préférence avec des niveaux de protection différents. Par exemple, le module 134 présente un niveau de protection supérieur à celui du module 132.

Alternativement, tout ou partie de ces modules 132, 134 pourrait être implémenté sous forme de modules matériels, c'est-à-dire sous forme d'un circuit électronique, par exemple micro-câblé, ne faisant pas intervenir de programme d'ordinateur.

Le système de validation 130 est en outre conçu pour fournir une estimation $\hat{I}_{BT}$ du courant basse tension $I_{BT}$ et une estimation $\hat{I}_{HT}$ du courant haute tension $I_{HT}$. Par exemple, l'une de ces estimations est obtenues à partir de la mesure du courant de masse $MI_M$ ou bien de son estimation $\hat{I}_M$. Par exemple, l'estimation $\hat{I}_{BT}$ du courant basse tension $I_{BT}$ est prise égale à la somme des mesures des courants entrant $I_{1-3}$ dans les cellules $108_{1-3}$, tandis que l'estimation $\hat{I}_{HT}$ du courant haute tension $I_{HT}$ est prise égale à la somme des mesures des courants entrant $I_{1-3}$ dans les cellules, moins le courant de masse, mesuré $MI_M$ ou bien estimé $\hat{I}_M$ :

[Math. 4]

$$\hat{I}_{BT} = \sum MI_k$$

$$\hat{I}_{HT} = \left(\sum MI_k\right) - MI_M \quad ou\ bien \quad \hat{I}_{HT} = \left(\sum MI_k\right) - \hat{I}_M$$

Comme l'estimation $\hat{I}_{BT}$ est utilisée lors de l'estimation du courant de masse $\hat{I}_M$ dont la cohérence est confirmée par la mesure du courant de masse $MI_M$, cette estimation $\hat{I}_{BT}$ peut atteindre le niveau ASIL B. Il s'en suit que l'estimation $\hat{I}_{HT}$ qui est réalisée sur la base du courant estimé $\hat{I}_{BT}$ et du courant de masse peut également atteindre le niveau ASIL B.

Dans l'exemple décrit, ces estimations $\hat{I}_{HT}$ et $\hat{I}_{BT}$ sont établies par le système informatique 136, par exemple dans le module 132. Le système informatique 136 peut être connecté à une unité de commande électronique 138, généralement désignée par l'acronyme ECU (de l'anglais « Electronic Control Unit ») du véhicule automobile, pour lui envoyer ces estimations $\hat{I}_{HT}$ et $\hat{I}_{BT}$, du moins lorsque le courant de masse mesuré $MI_M$ a été validé.

Le système de validation 130 (par exemple, le système informatique 136) peut en outre conçu, en cas de non validation du courant de masse mesuré $MI_M$, pour fournir en complément ou bien à la place des estimations $\hat{I}_{HT}$, $\hat{I}_{BT}$, un message indiquant cette non validation.

Par ailleurs, dans l'exemple décrit, le système de protection 130 est conçu pour fournir un message indiquant le placement du convertisseur de tension 106 en mode sécurisé, par exemple à l'unité de commande électronique 138. Par exemple, le signal de mise en protection fourni par au moins un des dispositifs de comparaison 120, 122, 124 peut également être fourni au système informatique 136, qui, en réponse à ce signal, envoie le message de placement en mode sécurisé à unité de commande électronique 138.

Il apparaît clairement qu'un convertisseur de tension tel que celui décrit précédemment permet une détection de court-circuit d'une manière simple et économique.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Convertisseur de tension (106) comportant :

   - un point de masse ($P_M$) destiné à être connecté à une masse électrique (M) ;
   - un point de haute tension ($P_{HT}$) destiné à présenter une haute tension (HT) par rapport à la masse électrique (M) ;
   - un point de basse tension ($P_{BT}$) destiné à présenter une basse tension (BT) par rapport à la masse électrique (M) ;
   - au moins une cellule de conversion de tension ($108_1$, $108_2$, $108_3$) connectée aux points de masse ($P_M$), de haute tension ($P_{HT}$) et de basse tension ($P_{BT}$) pour réaliser une conversion entre la haute tension (HT) et la basse tension (BT) ; et
   - un système de protection (118) conçu pour détecter un court-circuit entre les points de masse ($P_M$) et de haute tension ($P_{HT}$) et/ou entre les points de masse ($P_M$) et de basse tension ($P_{BT}$) ;

   caractérisé en ce qu'il comporte en outre un dispositif (110) de mesure d'un courant de masse ($I_M$) circulant entre ce point de masse ($P_M$) et la masse électrique (M), et en ce que le système de protection (118) est conçu pour détecter le court-circuit à partir du courant de masse mesuré ($MI_M$).

2. Convertisseur de tension (106) selon la revendication 1, dans lequel le système de protection (118) est conçu, en réponse à la détection du court-circuit, pour placer le convertisseur de tension (106) dans un mode sécurisé empêchant un écoulement de courant entre les points de haute tension ($P_{HT}$) et de basse tension ($P_{BT}$) et vice versa au travers de la ou des cellules ($108_1$, $108_2$, $108_3$).

3. Convertisseur de tension (106) selon la revendication 2, dans lequel, dans le mode sécurisé, le point de basse tension ($P_{BT}$) est déconnecté de chaque cellule ($108_1$, $108_2$, $108_3$) afin d'empêcher un écoulement de courant entre la ou les cellules ($108_1$, $108_2$, $108_3$) et le point de basse tension ($P_{BT}$) et vice versa.

4. Convertisseur de tension (106) selon la revendication 3, comportant en outre un commutateur de sécurité ($126_1$, $126_2$, $126_3$) pour chaque cellule ($108_1$, $108_2$, $108_3$), placé entre cette cellule ($108_1$, $108_2$, $108_3$) et le point de basse tension ($P_{BT}$) et dans lequel le dispositif de protection (118) est conçu pour placer le convertisseur de tension (106) en mode sécurisé, en ouvrant ce ou ces commutateurs de sécurité ($126_1$, $126_2$, $126_3$).

5. Convertisseur de tension (106) selon l'une quelconque des revendications 2 à 4, dans lequel, dans le mode sécurisé, chaque cellule ($108_1$, $108_2$, $108_3$) est dans un état sécurisé dans lequel tout passage de courant dans la cellule ($108_1$, $108_2$, $108_3$) est bloqué.

6. Convertisseur de tension (106) selon l'une quelconque des revendications 1 à 5, dans lequel chaque cellule ($108_1$, $108_2$, $108_3$) comporte un bras de commutation comportant un interrupteur de côté haut (202) et un interrupteur de côté bas (204) connectés l'un à l'autre en un point milieu (206), le bras de commutation étant connecté entre le point de haute tension ($P_{HT}$) et le point de masse ($P_M$), tandis que le point milieu (206) est connecté au point de basse tension ($P_{BT}$), par exemple par l'intermédiaire d'une inductance (208).

7. Convertisseur de tension (106) selon les revendications 5 et 6 prises ensemble, dans lequel le système de protection (118) est conçu pour placer chaque cellule ($108_1$, $108_2$, $108_3$) dans son état sécurisé, en commandant l'ouverture de ses interrupteurs de côté haut (202) et bas (204).

8. Convertisseur de tension (106) selon l'une quelconque des revendications 1 à 7, dans lequel le système de protection (118) comporte un dispositif de comparaison (120) conçu pour détecter le court-circuit lorsque la mesure de courant de masse ($MI_M$) est supérieure à un seuil prédéfini.

9. Convertisseur de tension (106) selon l'une quelconque des revendications 1 à 8, comportant en outre un dispositif

(112) de mesure de la haute tension (HT) et dans lequel le système de protection (118) est conçu pour détecter un court-circuit à partir de la mesure de haute tension (MHT), par exemple lorsque cette dernière passe sous à un seuil prédéfini.

10. Convertisseur de tension (106) selon l'une quelconque des revendications 1 à 9, comportant en outre un dispositif (114) de mesure de la basse tension (BT) et dans lequel le système de protection (118) est conçu pour détecter un court-circuit à partir de la mesure de basse tension (MBT), par exemple lorsque cette dernière passe sous un seuil prédéfini.

11. Convertisseur de tension (106) selon l'une quelconque des revendications 1 à 10, comportant en outre, pour chaque cellule ($108_1$, $108_2$, $108_3$), un dispositif ($116_1$, $116_2$, $116_3$) de mesure d'un courant de cellule ($I_1$, $I_2$, $I_3$) entrant dans la cellule ($108_1$, $108_2$, $108_3$) depuis le point de basse tension ($P_{BT}$), ainsi qu'un système (130) de validation du courant de masse mesuré ($MI_M$) à partir des courants de cellule mesurés ($MI_1$, $MI_2$, $MI_3$).

12. Convertisseur de tension (106) selon la revendication 11, dans lequel le système de validation (130) est en outre conçu, en cas de non validation, pour fournir un message indiquant la non validation du courant de masse mesuré ($MI_M$).

13. Convertisseur de tension (106) selon la revendication 11 ou 12, dans lequel le système de validation (130) comporte un module (132) d'estimation du courant de masse ($I_M$) et un module (134) de comparaison du courant de masse mesuré ($MI_M$) avec le courant de masse estimé ($\hat{I}_M$) pour déterminer si les courants de masse mesuré ($MI_M$) et estimé ($\hat{I}_M$) sont consistants l'un avec l'autre.

14. Véhicule automobile comportant un convertisseur de tension (106) selon l'une quelconque des revendications 1 à 13.

**Patentansprüche**

1. Spannungswandler (106), umfassend:

  - einen Massepunkt ($P_M$), der dazu bestimmt ist, an eine elektrische Masse (M) angeschlossen zu werden;
  - einen Punkt mit hoher Spannung ($P_{HT}$), der dazu bestimmt ist, eine hohe Spannung (HT) in Bezug auf die elektrische Masse (M) aufzuweisen;
  - einen Punkt mit niedriger Spannung ($P_{BT}$), der dazu bestimmt ist, eine niedrige Spannung (HT) in Bezug auf die elektrische Masse (M) aufzuweisen;
  - mindestens eine Spannungswandlerzelle ($108_1$, $108_2$, $108_3$), die an den Massepunkt ($P_M$), den Punkt mit hoher Spannung ($P_{HT}$) und den Punkt mit niedriger Spannung ($P_{BT}$) angeschlossen ist, um eine Umwandlung zwischen der hohen Spannung (HT) und der niedrigen Spannung (BT) auszuführen; und
  - ein Schutzsystem (118), das dazu ausgelegt ist, einen Kurzschluss zwischen dem Massepunkt ($P_M$) und dem Punkt mit hoher Spannung ($P_{HT}$) und/oder zwischen dem Massepunkt ($P_M$) und dem Punkt mit niedriger Spannung ($P_{BT}$) zu detektieren;

  **dadurch gekennzeichnet, dass** er ferner eine Vorrichtung (110) zum Messen eines Massestroms ($I_M$) umfasst, der zwischen diesem Massepunkt ($P_M$) und der elektrischen Masse (M) fließt, und dadurch, dass das Schutzsystem (118) dazu ausgelegt ist, den Kurzschlussstrom ausgehend von dem gemessenen Massestrom ($MI_M$) zu detektieren.

2. Spannungswandler (106) nach Anspruch 1, bei dem das Schutzsystem (118) dazu ausgelegt ist, als Reaktion auf die Detektion des Kurzschlusses den Spannungswandler (106) in einen gesicherten Modus zu versetzen, der einen Stromfluss zwischen dem Punkt mit hoher Spannung ($P_{HT}$) und dem Punkt mit niedriger Spannung ($P_{BT}$) und umgekehrt über die Zelle oder Zellen ($108_1$, $108_2$, $108_3$) verhindert.

3. Spannungswandler (106) nach Anspruch 2, bei dem in dem gesicherten Modus der Punkt mit niedriger Spannung ($P_{BT}$) von jeder Zelle ($108_1$, $108_2$, $108_3$) getrennt ist, um einen Stromfluss zwischen der oder den Zellen ($108_1$, $108_2$, $108_3$) und dem Punkt mit niedriger Spannung ($P_{BT}$) und umgekehrt zu verhindern.

4. Spannungswandler (106) nach Anspruch 3, der ferner einen Sicherheitsumschalter ($126_1$, $126_2$, $126_3$) für jede Zelle ($108_1$, $108_2$, $108_3$) umfasst, der zwischen dieser Zelle ($108_1$, $108_2$, $108_3$) und dem Punkt mit niedriger Spannung ($P_{BT}$) angeordnet ist, und bei dem die Schutzvorrichtung (118) dazu ausgelegt ist, den Spannungswandler (106) in den gesicherten Modus zu versetzen, indem er diesen oder diese Sicherheitsumschalter ($126_1$, $126_2$, $126_3$) öffnet.

5. Spannungswandler (106) nach einem der Ansprüche 2 bis 4, bei dem, in dem gesicherten Modus, jede Zelle ($108_1$, $108_2$, $108_3$) in einem gesicherten Zustand ist, in dem jeder Stromdurchgang in der Zelle ($108_1$, $108_2$, $108_3$) blockiert ist.

6. Spannungswandler (106) nach einem der Ansprüche 1 bis 5, bei dem jede Zelle ($108_1$, $108_2$, $108_3$) einen Schaltarm umfasst, der einen High-Side-Schalter (202) und einen Low-Side-Schalter (204) umfasst, die in einem Mittelpunkt (206) aneinander angeschlossen sind, wobei der Schaltarm zwischen dem Punkt mit hoher Spannung ($P_{HT}$) und dem Massepunkt ($P_M$) angeschlossen ist, während der Mittelpunkt (206) an den Punkt mit niedriger Spannung ($P_{BT}$) angeschlossen ist, zum Beispiel über eine Induktivität (208).

7. Spannungswandler (106) nach den Ansprüchen 5 und 6 zusammengenommen, bei dem das Schutzsystem (118) dazu ausgelegt ist, jede Zelle ($108_1$, $108_2$, $108_3$) in ihren gesicherten Zustand zu versetzen, indem es das Öffnen ihrer High-Side- (202) und Low-Side-Schalter (204) steuert.

8. Spannungswandler (106) nach einem der Ansprüche 1 bis 7, bei dem das Schutzsystem (118) eine Vergleichsvorrichtung (120) umfasst, die dazu ausgelegt ist, den Kurzschluss zu detektieren, wenn die Massestrommessung ($MI_M$) größer als ein vorgegebener Schwellenwert ist.

9. Spannungswandler (106) nach einem der Ansprüche 1 bis 8, der ferner eine Vorrichtung (112) zum Messen der hohen Spannung (HT) umfasst und bei dem das Schutzsystem (118) dazu ausgelegt ist, einen Kurzschluss ausgehend von der Messung der hohen Spannung (MHT) zu detektieren, zum Beispiel, wenn Letztere einen vorgegebenen Schwellenwert unterschreitet.

10. Spannungswandler (106) nach einem der Ansprüche 1 bis 9, der ferner eine Vorrichtung (114) zum Messen der niedrigen Spannung (BT) umfasst und bei dem das Schutzsystem (118) dazu ausgelegt ist, einen Kurzschluss ausgehend von der Messung der niedrigen Spannung (MBT) zu detektieren, zum Beispiel, wenn Letztere einen vorgegebenen Schwellenwert unterschreitet.

11. Spannungswandler (106) nach einem der Ansprüche 1 bis 10, der ferner, für jede Zelle ($108_1$, $108_2$, $108_3$), eine Vorrichtung ($116_1$, $116_2$, $116_3$) zum Messen eines Zellenstroms ($I_1$, $I_2$, $I_3$), der in die Zelle ($108_1$, $108_2$, $108_3$) von dem Punkt mit niedriger Spannung ($P_{BT}$) aus eintritt, sowie ein Validierungssystem (130) zum Validieren des gemessenen Massestroms ($MI_M$) ausgehend von den gemessenen Zellenströmen ($MI_1$, $MI_2$, $MI_3$) umfasst.

12. Spannungswandler (106) nach Anspruch 11, bei dem das Validierungssystem (130) ferner dazu ausgelegt ist, im Fall der Nichtvalidierung eine Meldung auszugeben, die die Nichtvalidierung des gemessenen Massestroms ($MI_M$) angibt.

13. Spannungswandler (106) nach Anspruch 11 oder 12, bei dem das Validierungssystem (130) ein Schätzmodul (132) zum Schätzen des Massestroms ($I_M$) und ein Vergleichsmodul (134) zum Vergleichen des gemessenen Massestroms ($MI_M$) mit dem geschätzten Massestrom ($\hat{I}_M$) umfasst, um zu bestimmen, ob die gemessenen ($MI_M$) und geschätzten Masseströme ($\hat{I}_M$) miteinander konsistent sind.

14. Kraftfahrzeug, das einen Spannungswandler (106) nach einem der Ansprüche 1 bis 13 umfasst.

## Claims

1. Voltage converter (106) comprising:

   - a ground point ($P_M$) intended to be connected to an electrical ground (M);
   - a high-voltage point ($P_{HT}$) intended to have a high voltage (HT) relative to the electrical ground (M);
   - a low-voltage point ($P_{BT}$) intended to have a low voltage (BT) relative to the electrical ground (M);
   - at least one voltage conversion cell ($108_1$, $108_2$, $108_3$) connected to the ground ($P_M$), high-voltage ($P_{HT}$) and low-voltage ($P_{BT}$) points in order to perform a conversion between the high voltage (HT) and the low voltage (BT); and
   - a protection system (118) designed to detect a short circuit between the ground ($P_M$) and high-voltage ($P_{HT}$) points and/or between the ground ($P_M$) and low-voltage ($P_{BT}$) points;

**characterized in that** it further comprises a device (110) for measuring a ground current ($I_M$) flowing between this ground point ($P_M$) and the electrical ground (M), and **in that** the protection system (118) is designed to detect the short circuit from the measured ground current ($MI_M$).

2. Voltage converter (106) according to Claim 1, wherein the protection system (118) is designed, in response to detecting the short circuit, to place the voltage converter (106) in a safe mode preventing a flow of current between the high-voltage ($P_{HT}$) and low-voltage ($P_{BT}$) points and vice versa through the one or more cells ($108_1$, $108_2$, $108_3$).

3. Voltage converter (106) according to Claim 2, wherein, in the safe mode, the low-voltage point ($P_{BT}$) is disconnected from each cell ($108_1$, $108_2$, $108_3$) in order to prevent a flow of current between the one or more cells ($108_1$, $108_2$, $108_3$) and the low-voltage point ($P_{BT}$) and vice versa.

4. Voltage converter (106) according to Claim 3, further comprising a safety switch ($126_1$, $126_2$, $126_3$) for each cell ($108_1$, $108_2$, $108_3$), placed between this cell ($108_1$, $108_2$, $108_3$) and the low-voltage point ($P_{BT}$) and wherein the protection device (118) is designed to place the voltage converter (106) in a safe mode by opening this or these safety switches ($126_1$, $126_2$, $126_3$).

5. Voltage converter (106) according to any one of Claims 2 to 4, wherein, in the safe mode, each cell ($108_1$, $108_2$, $108_3$) is in a safe state in which any passage of current through the cell ($108_1$, $108_2$, $108_3$) is blocked.

6. Voltage converter (106) according to any one of Claims 1 to 5, wherein each cell ($108_1$, $108_2$, $108_3$) comprises a switching arm comprising a high-side switch (202) and a low-side switch (204) connected to each other at a midpoint (206), with the switching arm being connected between the high-voltage point ($P_{HT}$) and the ground point ($P_M$), while the midpoint (206) is connected to the low-voltage point ($P_{BT}$), for example by means of an inductor (208).

7. Voltage converter (106) according to Claims 5 and 6 taken together, wherein the protection system (118) is designed to place each cell ($108_1$, $108_2$, $108_3$) in its safe state by controlling the opening of its high-side (202) and low-side (204) switches.

8. Voltage converter (106) according to any one of Claims 1 to 7, wherein the protection system (118) comprises a comparison device (120) designed to detect the short circuit when the ground current measurement ($MI_M$) is greater than a predefined threshold.

9. Voltage converter (106) according to any one of Claims 1 to 8, further comprising a device (112) for measuring the high voltage (HT) and wherein the protection system (118) is designed to detect a short circuit from the high-voltage measurement (MHT), for example when said measurement drops below a predefined threshold.

10. Voltage converter (106) according to any one of Claims 1 to 9, further comprising a device (114) for measuring the low voltage (BT) and wherein the protection system (118) is designed to detect a short circuit from the low-voltage measurement (MBT), for example when said measurement drops below a predefined threshold.

11. Voltage converter (106) according to any one of Claims 1 to 10, further comprising, for each cell ($108_1$, $108_2$, $108_3$), a device ($116_1$, $116_2$, $116_3$) for measuring a cell current ($I_1$, $I_2$, $I_3$) entering the cell ($108_1$, $108_2$, $108_3$) from the low-voltage point ($P_{BT}$), and a system (130) for validating the measured ground current ($MI_M$) from the measured cell currents ($MI_1$, $MI_2$, $MI_3$).

12. Voltage converter (106) according to Claim 11, wherein the validation system (130) is further designed, in the event of non-validation, to provide a message indicating the non-validation of the measured ground current ($MI_M$).

13. Voltage converter (106) according to Claim 11 or 12, wherein the validation system (130) comprises a module (132) for estimating the ground current ($I_M$) and a module (134) for comparing the measured ground current ($MI_M$) with the estimated ground current ($\hat{I}_M$) for determining whether the measured ($MI_M$) and estimated ($\hat{I}_M$) ground currents are consistent with each other.

14. Motor vehicle comprising a voltage converter (106) according to any one of Claims 1 to 13.

# Figure 1

# Figure 2

# Figure 3

**EP 4 264 764 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019120536 A1
- US 2015061388 A1